# EUROPÄISCHE PATENTSCHRIFT

(11) **EP 4 476 111 B1**
(45) Veröffentlichungstag und Bekanntmachung des Hinweises auf die Patenterteilung: **03.06.2026**
(21) Anmeldenummer: 23703048.1
(22) Anmeldetag: 01.02.2023
(51) Int. Cl.: B60W 40/08, B60W 40/09, B60W 50/08

(54) **FAHRERASSISTENZSYSTEM, FORTBEWEGUNGSMITTEL UND VERFAHREN ZUM BETRIEB EINES FAHRERASSISTENZSYSTEMS**
DRIVER ASSISTANCE SYSTEM, MEANS OF LOCOMOTION AND METHOD FOR OPERATING A DRIVER ASSISTANCE SYSTEM
SYSTÈME D'AIDE À LA CONDUITE, MOYEN DE LOCOMOTION ET PROCÉDÉ DE FONCTIONNEMENT D'UN SYSTÈME D'AIDE À LA CONDUITE

(30) Priorität: 08.02.2022 DE 102022201288
(43) Veröffentlichungstag der Anmeldung: 18.12.2024
(73) Patentinhaber: VOLKSWAGEN AKTIENGESELLSCHAFT, 38440 Wolfsburg (DE)
(72) Erfinder: HOPPE, Jannis, 38100 Braunschweig (DE); GÜNTERBERG, Thomas, 38448 Wolfsburg (DE); TERFLOTH, Philipp, 38114 Braunschweig (DE); ROHLFS, Michael, 38531 Rötgesbüttel (DE); HAGERODT, Arnd, 38300 Wolfenbüttel (DE)
(86) Internationale Anmeldenummer: PCT/EP2023/052457
(87) Internationale Veröffentlichungsnummer: WO 2023/152003

(56) Entgegenhaltungen:
- DE-A1- 102011 055 495
- DE-A1- 102019 102 924
- DE-T5- 112016 001 585
- US-A1- 2017 313 324

## Beschreibung

Die vorliegende Erfindung betrifft ein Fahrerassistenzsystem, ein Fortbewegungsmittel sowie ein Verfahren zum Betrieb eines Fahrerassistenzsystems zur Unterstützung eines Fahrers eines Fortbewegungsmittels. Insbesondere betrifft die vorliegende Erfindung eine Verbesserung der anwenderspezifischen Wünsche und Vorlieben bei der Anbietung und Aktivierung von Fahrerassistenzfunktionen.

Die Funktionsmehrung in modernen Fortbewegungsmitteln wird von manchen Kunden als zu komplex wahrgenommen. Mit anderen Worten wird die Bedienbarkeit bzw. die erstmalige Entdeckung von Fahrerassistenzfunktionen aufgrund immer weiterer Assistenzfunktionen einerseits und immer optisch aufgeräumterer Fahrerarbeitsplätze andererseits mitunter bemängelt, weshalb eine Vereinfachung notwendig erscheint. Dabei ist insbesondere eine Reduzierung der Anzahl von Tasten auf dem Lenkrad und die Integration alternativer Bedienvarianten zielführend. Mitunter werden Spracheingaben für die Konfiguration und Aktivierung von Fahrerassistenzfunktionen vorgeschlagen. Beispielsweise können Navigationsfunktionen oder die Verstellung von Heiz-/Klimaanlagen-Parametern über Sprachkommandos angepasst werden. Bei den bekannten Lösungen handelt es sich ausschließlich um Sprachassistenten, die Bedienhandlungen des Fahrers auf Basis eines Sprachbefehls ausführen. Es erfolgt zunächst eine Aktivierung durch den Fahrer (z.B. über eine Aktivierphrase z.B. "Hello ID" oder über eine Taste). Damit ist eine aktive Fahrerhandlung notwendig. Ein proaktiver Kl-Assistent wird hingegen nicht realisiert.

Die DE 10 2011 055 495 A1 offenbart ein Verfahren zum Betrieb eines Fahrerassistenzsystems eines Fahrzeugs, bei welchem im Ansprechen auf das sensortechnisch erkannte Einfahren in eine Spielstraße ein Limiter die Fahrzeuggeschwindigkeit auf 20 km/h reduziert, sofern dieser Vorgang durch den identifizierten Fahrer bereits zu einem früheren Befahren einer Spielstraße erfolgt ist.

Des Weiteren wird auf die Druckschriften US 2017/0313324 A1 sowie
DE 11 2016 001 585 T5 verwiesen, welche hilfreich für das Verständnis der vorliegenden Erfindung sind.

DE 10 2019 102 924 A1 offenbart ein Verfahren zum Betreiben einer Fahrerassistenzfunktion eines Fahrzeuges, bei dem eine Position des Fahrzeuges ermittelt wird. Kartendaten einer Straßenkarte werden bereitgestellt. Abhängig von der Position werden aktuelle und historische Verkehrsdaten bereitgestellt. Eine Liste von Fahrerassistenzfunktionen wird bereitgestellt. Abhängig von der Position, den Kartendaten und den aktuellen und historischen Verkehrsdaten wird ermittelt, ob eine Situation vorliegt, in der eine Fahrerassistenzfunktion der Liste genutzt werden kann. Falls ermittelt wurde, dass die Situation vorliegt, wird einem Fahrer des Fahrzeugs eine Information bereitgestellt zum Einstellen der Fahrerassistenzfunktion.

Es ist eine Aufgabe der vorliegenden Erfindung, die Unterstützung eines Anwenders eines Fortbewegungsmittels bei der Auswahl und Aktivierung geeigneter und gewünschter Fahrerassistenzfunktionen weiter zu verbessern.

Die vorgenannte Aufgabe wird erfindungsgemäß durch ein Verfahren gemäß Anspruch 1 zum Betrieb eines Fahrerassistenzsystems zur Unterstützung eines Fahrers eines Fortbewegungsmittels sowie auch durch ein Fahrerassistenzsystem gemäß Anspruch 9 gelöst.
Das Fortbewegungsmittel kann beispielsweise als PKW, Transporter, Motorrad, LKW, Luft-und/oder Wasserfahrzeug ausgestaltet sein. Das Fortbewegungsmittel kann ein autonom fahrfähiges Fortbewegungsmittel, insbesondere jedoch auch ein lediglich teilautonom bzw. assistiert führbares Fortbewegungsmittel sein. In einem nächsten Schritt wird eine Fahrsituation automatisch, insbesondere mittels eines Umgebungssensors oder weiterer Umgebungssensoren, ermittelt. Die Fahrsituation kann beispielsweise durch eine Stufe der Führungsautomatisierung (Level 1 bis 4) oder durch einen Bewegungszustand, insbesondere eine Reisegeschwindigkeit, eine Richtung, eine Beschleunigung (Längs- und/oder Querbeschleunigung) und weitere Umstände charakterisiert sein. Beispielsweise kann ein Niederschlag, eine Umgebungslichtintensität oder eine Kurvigkeit der vorausliegenden Straße die Fahrsituation kennzeichnen. Daher könnte die Fahrsituation auch als "Fahrzeugsituation" verstanden werden, welche durch Umgebungssensorik des Fortbewegungsmittels wie auch durch internetvermittelte Informationen charakterisiert sein kann. Die Fahrsituation sowie die Fahrzeugsituation werden im Folgenden der Einfachheit halber auch als "Situation" zusammengefasst, welche datentechnisch automatisch ermittelt wird. In einem zweiten Schritt wird eine, insbesondere vordefinierte, Bedingung für das Aktivieren einer Fahrerassistenzfunktion automatisch ermittelt. Mit anderen Worten wird aus der Situation abgeleitet, welche Fahrerassistenzfunktionen für die Situation als geeignet bzw. der Sicherheit oder dem Komfort zuträglich ermittelbar sind. Hierzu kann ein Datensatz in einem Datenspeicher des Fortbewegungsmittels abgelegt sein, in welchem zu der ermittelten Situation grundsätzlich denkbare oder geeignete Fahrerassistenzfunktionen zugeordnet sind. Anschließend wird ermittelt, inwiefern die Bedingung für das Aktivieren der Fahrerassistenzfunktion bzw. der Vielzahl der Situation zugeordneter vordefinierter Bedingungen im vorliegenden Fall erfüllt sind. Mit anderen Worten werden Parameter der Situation sensorisch aufgenommen und kategorisiert, um die tatsächlich vorliegende Situation datentechnisch zu charakterisieren. Hierbei kann beispielsweise eine Kurvigkeit bzw. Kurvenradien, Lichteinfall, Bewaldung in der Umgebung, Eisneigung, Fahrbahnbelag und weiteres sensorisch festgestellt und datentechnisch zusammengetragen werden. Auf diese Weise kann die Informationslage für die Ermittlung der vordefinierten Bedingung zum Aktiveren der Fahrerassistenzfunktion deutlich verbessert bzw. konkreter formuliert werden und im weiteren Verlauf des erfindungsgemäßen Verfahrens eine besonders geeignete Entscheidung gefällt werden. Zunächst wird jedoch auch eine Identität des aktuellen Fahrers des Fortbewegungsmittels automatisch ermittelt. Hierzu kommen sämtliche im Stand der Technik bekannte Verfahren infrage. Es wird somit ein dem Fortbewegungsmittel grundsätzlich bekannter Fahrer wiedererkannt und die mit ihm assoziierten Daten zumindest anteilig verwendet. Insbesondere kann in einem nächsten Schritt ein Satz von fahrerspezifischen Akzeptanzparametern bzw. Akzeptanzbedingungen überprüft werden, inwiefern diese erfüllt bzw. nicht erfüllt sind. Alternativ oder zusätzlich können auch Schwellenwerte für einzelne Parameter in den Akzeptanzbedingungen informationstechnisch hinterlegt sein. Beispielsweise kann eine Kurvigkeit und/oder eine Umgebungslichtintensität und/oder eine Niederschlagsstärke o.ä. informationstechnisch hinterlegt werden, ab welcher der Fahrer üblicherweise Fahrerassistenzfunktionen nachfragt bzw. selbst einschaltet. Hierbei kann auch überprüft werden, inwiefern dem Fortbewegungsmittel zu einem früheren Zeitpunkt unter entsprechenden Bedingungen angebotene Fahrerassistenzfunktionen vom Fahrer auch tatsächlich akzeptiert oder abgelehnt worden sind. Hierbei kann die zuvor ermittelte Situation bzw. Situationsklasse darüber entscheiden, welche Akzeptanzbedingungen überhaupt geprüft werden. Alternativ oder zusätzlich kann die Identität des Fahrers darüber entscheiden, welche Akzeptanzbedingungen überhaupt infrage kommen. Sofern nämlich der Fahrer bestimmte Fahrerassistenzfunktionen generell nicht verwenden möchte, kann die Überprüfung der diesbezüglichen Akzeptanzbedingungen bzw. Schwellwerte entfallen. Die Akzeptanzbedingungen können sozusagen als "Schlüssel" dafür verstanden werden, dass eine Fahrerassistenzfunktion als vom Fahrer vermutlich gewünscht anzusehen ist und gegebenenfalls mit welchen Schwellenwerten die Parameter der Situation zu vergleichen sind, um die Aktivierung der Fahrerassistenzfunktion als durch den Anwender vermutlich erwünscht zu bewerten. Erfindungsgemäß werden auch Daten mittels weiterer Fortbewegungsmittel ermittelt. Hierbei wird ermittelt, wenn Fahrer anderer Identitäten in ähnlichen oder identischen Situationen bestimmte Akzeptanzbedingungen an den Tag gelegt haben bzw. definiert haben, welche auch für den Fahrer des betrachteten Fortbewegungsmittels plausibel sind. Sofern also eine hinreichende "Verwandtschaft" zwischen den Situationen der Flottenfahrzeuge bzw. Fremdfahrzeuge und des betrachteten Fahrzeugs vorherrscht, wird eine Anpassung des Satzes von von Akzeptanzbedingungen vorgenommen, um den erfindungsgemäßen Vorgang zur Aktivierung oder zum Vorschlagen der Fahrerassistenzfunktion zu verbessern. Anschließend wird, wenn die Akzeptanzbedingung bzw. Akzeptanzbedingungen erfüllt ist/sind, die zugeordnete Fahrerassistenzfunktion aktiviert und/oder vorgeschlagen. Mit anderen Worten wird bei erfüllten Akzeptanzbedingungen die Fahrerassistenzfunktion zumindest als für die Fahrzeugführung in der aktuellen Situation zuträglich bewertet und dem Anwender vorgeschlagen. Dies kann beispielsweise eine optische Anzeige auf einer Anzeigeeinheit und/oder eine akustische Ausgabe (z.B. Sprachausgabe) umfassen. Alternativ oder zusätzlich können auch haptische bzw. taktile Ausgaben an den Anwender ergehen, um die Fahrerassistenzfunktion vorzuschlagen. Sofern der Anwender hierzu sein Einverständnis vorab erteilt hat bzw. das Fortbewegungsmittel ohnehin aktuell eine (teil-)autonome Führungsweise verwendet, kann die Fahrerassistenzfunktion auch unmittelbar aktiviert werden. Sofern eine Parametrierung der Fahrerassistenzfunktion erfolgen sollte, kann diese ebenfalls in Abhängig der Parameter der Situation vorgenommen werden. Beispielsweise kann ein stufenweise definierbarer Parameter oder ein kontinuierlich veränderbarer Parameter in Abhängigkeit der aktuellen Situation (z.B. Niederschlagsstärke, Umgebungslichtintensität, mittlerer Kurvenradius, o.ä.) verwendet werden, um einen Parameter der Fahrerassistenzfunktion höher oder niedriger einzustellen.

Die Unteransprüche zeigen bevorzugte Weiterbildungen der Erfindung.

Der ermittelten Situation können beispielsweise zwei, drei, vier, fünf oder mehr einzelne Bedingungen zugeordnet sein und dahingehend überprüft werden, ob eine Fahrerassistenzfunktion, welche aus einer Vielzahl Fahrerassistenzfunktionen auszuwählen ist, aktiviert werden soll. Beispielsweise können für einen ersten Fahrer zwei oder drei einzelne Bedingungen zur Aktivierung der Fahrerassistenzfunktion Vorbedingung sein, während ein anderer Fahrer lediglich eine oder zwei Bedingungen hinterlegt hat. Somit wird in Abhängigkeit der Identität des Fahrers in ein und derselben Situation eine betrachtete Fahrerassistenzfunktion entweder aktiviert/vorgeschlagen oder nichtaktiviert/vorgeschlagen.

Die Identität des Fahrers kann aus einer Vielzahl im Fortbewegungsmittel hinterlegter unterschiedlicher Identitäten von Fahrern ausgewählt werden. Jede der Identitäten kann eine oder eine Vielzahl von potentiell gewünschten Fahrerassistenzfunktionen dahingehend bezeichnen, unter welchen Voraussetzungen diese vom Anwender gewünscht oder eher nicht gewünscht sind. Alternativ oder zusätzlich können unterschiedliche Akzeptanzbedingungen für die jeweiligen Fahrerassistenzfunktionen zugeordnet sein, so dass jeder Fahrer den einzelnen Fahrerassistenzfunktionen in Abhängigkeit der erkannten Situation unterschiedliche Schwellenwerte zuordnen bzw. Umstände definieren kann, unter welchen die Fahrerassistenzfunktion in einer jeweiligen Situation erwünscht ist. Somit können detaillierte Informationen über die vom Anwender vermutlich gewünschten Fahrerassistenzfunktionen situationsspezifisch im Fortbewegungsmittel hinterlegt sein.

Die Parameter können beispielsweise einen aktuellen oder vorausliegenden Streckenverlauf charakterisieren. Dieser kann beispielsweise hinsichtlich eines Fahrbahnbelages, einer Höchstgeschwindigkeit, hinsichtlich einer Kurvigkeit bzw. anhand von Kurvenradien charakterisiert sein. Alternativ oder zusätzlich kann die Situation durch eine Tageszeit und/oder eine Jahreszeit und/oder einen Wochentag und/oder eine Umgebungslichtintensität charakterisiert sein. Alternativ oder zusätzlich kann auch der Umstand als Parameter berücksichtigt werden, wie häufig der Fahrer an dieser Position bereits zu einem früheren Zeitpunkt gewesen ist. Durch die Vertrautheit des Fahrers kann darauf geschlossen werden, dass er weniger Hilfe bei der Orientierung benötigt. Auch können die Vitaldaten des Fahrers (Wachheitsgrad, Agilität, etc.) des Fahrers über geeignete Sensoren ermittelt und als Bestandteil einer Fahrsituation datentechnisch hinterlegt sein. Zudem kann das Vorhandensein und die Stärke von Niederschlag als Parameter für die Charakterisierung der Situation verwendet werden. Die vorgenannten Parameter können erfindungsgemäß in Abhängigkeit der Fahreridentität bewertet und gewichtet werden, um über die Aktivierung oder die Empfehlung einer Fahrerassistenzfunktion zu entscheiden.

Nachdem die Situation informationstechnisch erfasst worden ist, kann zunächst ermittelt werden, ob der identifizierte Fahrer grundsätzlich eine Unterstützung in einer solchen Situation wünscht. Erst sofern die Situation nicht als eine solche identifiziert werden kann, für welche der aktuelle Fahrer keinerlei Unterstützung durch das Fortbewegungsmittel wünscht, können in einem zweiten Schritt die Akzeptanzbedingungen im Einzelnen dahingehend geprüft werden, ob eine hinreichende Anzahl und/oder geeignete Schwellenwerte erreicht sind, im Ansprechen auf das Erreichen welcher die Aktivierung oder das Vorschlagen einer Fahrerassistenzfunktion vorgenommen werden.

Die Akzeptanzbedingungen können beispielsweise auch auf Basis einer Historie der Verwendung des Fortbewegungsmittels durch den Fahrer ermittelt werden. Beispielsweise kann die Historie über einen Zeitraum begrenzt ausgewertet werden, sofern sich eine solche Zeitbegrenzung eignet. Beispielsweise kann sich das Fahrzeugführungsverhalten des Fortbewegungsmittels des Fahrers über der Zeit ändern, so dass sich zu einem viel früheren Zeitpunkt ermittelte Vorlieben des Fahrers als nicht mehr aktuell darstellen. Beispielsweise kann ein Zeitraum von drei Monaten, sechs Monaten, neun Monaten, einem Jahr oder mehreren Jahren betrachtet werden, wenn für eine identifizierte Situation eine solche zeitliche Begrenzung angezeigt erscheint. Dies kann insbesondere dann der Fall sein, wenn sich zu einem bestimmten Zeitpunkt in der Vergangenheit das Fahrzeugnutzungsverhalten deutlich geändert hat. Eine solche Änderung kann beispielsweise darin bestehen, dass das Fortbewegungsmittel an einem anderen geografischen Ort seinen Nutzungsschwerpunkt hat. Eine solche Änderung des Fahrzeugnutzungsschwerpunktes kann beispielsweise durch eine Urlaubsfahrt, eine Änderung in der üblichen Sitzbelegung des Fortbewegungsmittels (beispielsweise Nachwuchs hinzugekommen oder ausgezogen) etc., ergeben hat. Derartige Umstände können dazu führen, dass die Fahrzeugführungsweise und somit der Assistenzbedarf des Fahrers einer Änderung unterliegen, welcher durch die Zeitbegrenzung der Auswertung der Fahrzeughistorie berücksichtigt werden kann. Selbstverständlich kann der Anwender auch durch eine explizite Eingabe (mittels einer Anwenderschnittstelle des Fortbewegungsmittels oder an seinem Smartphone) eine Bewertung der Akzeptanzbedingungen vornehmen bzw. diese anderweitig gewichten, ergänzen, aufräumen oder die Fahrzeughistorie auf einen anderen auszuwertenden Zeitraum ausweiten oder begrenzen.

Auf dieser Basis kann das erfindungsgemäße Verfahren dahingehend weitergebildet werden, dass eine Gültigkeit von Umständen des Betriebs des Fortbewegungsmittels als Bestandteile oder Kennzeichen einer Situation ermittelt werden und die Umstände mit Daten verglichen werden, welche kennzeichnen, unter welchen zur Situation ähnliche oder identische Situationen in der Vergangenheit aufgetreten sind. Die Situation kann beispielsweise durch eine geografische Position, eine Sitzbelegung/Besetzung des Fahrzeugs und/oder die Verwendung eines Anhängers mit dem Fahrzeug gekennzeichnet sein. Die vorgenannten und andere Umstände können insbesondere nach Ablauf einer vordefinierten Zeitdauer von der Berücksichtigung im Zuge der nachfolgend wiedergegebenen Schritte ausgeschlossen werden. Diese Umstände können beispielsweise dabei verwendet werden, die aktuelle Situation mit ähnlichen oder identischen Situationen in der Vergangenheit zu vergleichen. Auf diese Weise können auch in dem Zusammenhang der vergangenen Situationen vom Anwender akzeptierte oder abgelehnte Fahrerassistenzfunktionen ermittelt werden und für eine Entscheidung über einen Vorschlag eine automatische Aktivierung derselben Fahrerassistenzfunktionen herangezogen werden. Hat der Anwender in ähnlichen Situationen zu früheren Zeitpunkten keine Fahrerassistenzfunktionen oder nur einzelne Fahrerassistenzfunktionen verwenden wollen, kann ein Vorschlag bzw. eine automatische Aktivierung auch zum jetzigen Zeitpunkt unterbleiben, wenn nicht ein vorher definiertes Zeitintervall darauf schließen lässt, dass die Historie mit hinreichender Wahrscheinlichkeit nicht mehr die aktuellen Vorlieben des Fahrers repräsentiert. Anders ausgedrückt kann bei einer wiederholten Ablehnung einer Fahrerassistenzfunktion in ähnlichen Situationen die Fahrerassistenzfunktion in Abhängigkeit der Umstände nicht-aktiviert und/oder nicht-vorgeschlagen werden. Dieser Schritt kann alternativ oder im zeitlichen Nachgang zu den obigen Schritten ausgeführt werden.

Insbesondere können die weiter oben genannten Fremdfahrzeuge Informationen bereitstellen, welche in einem ähnlichen geografischen Bereich (Berglandschaft, Waldwege oder bewaldete Umgebung) unterwegs waren, als die ähnliche oder identische Situation aufgetreten ist. Somit kann das Fortbewegungsmittel bzw. Fahrerassistenzsystem an Akzeptanzbedingungen angepasst werden, welche für den aktuellen Fahrer vermutlich eine vielversprechende Ausgangsbasis darstellen, bereits bevor das Fortbewegungsmittel oder der Fahrer sich jemals an einem solchen Ort befunden hat. Somit kann eine frühestmögliche Anpassung des Fortbewegungsmittels / Fahrerassistenzsystems gewährleistet werden und eine bestmögliche Fahrsicherheit unterstützt werden.

Gemäß Anspruch 9 wird ein Fahrerassistenzsystem zur Unterstützung eines Fahrers eines Fortbewegungsmittels vorgeschlagen. Das Fahrerassistenzsystem umfasst ein elektronisches Steuergerät, welches einen Dateneingang, eine Auswerteeinheit und einen Datenausgang aufweist. Die Auswerteeinheit ist in Verbindung mit dem Dateneingang eingerichtet, die Ermittlungsschritte des erfindungsgemäßen Verfahrens auszuführen, während die Auswerteeinheit in Verbindung mit dem Datenausgang eingerichtet ist, die Fahrerassistenzfunktion zu aktivieren oder vorzuschlagen, wenn die Akzeptanzbedingung als erfüllt ermittelt wird. Die Merkmale, Merkmalskombinationen und die sich aus diesen ergebenden Vorteile entsprechen derart ersichtlich denjenigen, welche in Verbindung mit dem erfindungsgemäßen Verfahren ausgeführt worden sind, dass zur Vermeidung von Wiederholungen auf die obigen Ausführungen verwiesen wird.

Gemäß Anspruch 10 wird ein Fortbewegungsmittel (z.B. ein PKW, Transporter, Motorrad, LKW, Luft- und/oder Wasserfahrzeug) vorgeschlagen, welches ein Fahrerassistenzsystem gemäß dem zweitgenannten Erfindungsaspekt aufweist. Auch für das Fortbewegungsmittel ergeben sich somit die Merkmale, Merkmalskombinationen und die sich aus diesen ergebenden Vorteile in entsprechender Weise, so dass zur Vermeidung von Wiederholungen auf die obigen Ausführungen verwiesen wird.

Im Folgenden wird die Erfindung anhand von Ausführungsbeispielen genauer erläutert. Hierzu zeigen:
- Figur 1: eine schematische Darstellung von Vorgängen während der Ausführung eines erfindungsgemäßen Verfahrens durch ein Fahrerassistenzsystem eines erfindungsgemäßen Fortbewegungsmittels; und
- Figur 2: ein Flussdiagramm veranschaulichend Schritte eines Ausführungsbeispiels eines erfindungsgemäßen Verfahrens zum Betrieb eines Fahrerassistenzsystems.

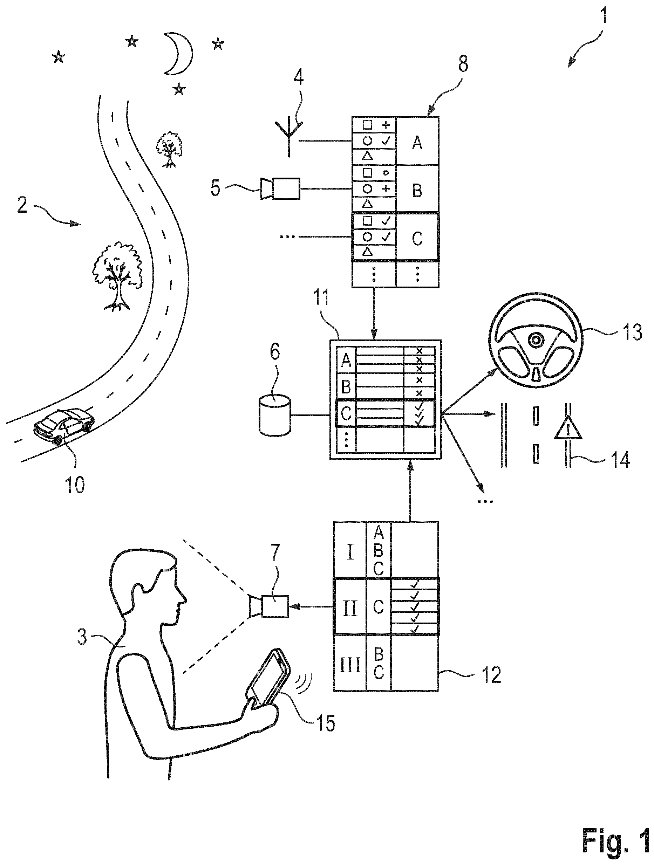

Figur 1 zeigt ein Fahrerassistenzsystem 1, welches in einem PKW als Fortbewegungsmittel 10 in einer Szenerie 2 unterwegs ist. Es handelt sich um eine Überlandfahrt bei kurvigem Streckenverlauf und Dunkelheit. Über Umgebungssensoren 5 in Form einer Kamera und einer Antenne 4 werden Informationen bezüglich der Szenerie 2 ermittelt. In einem Situationsermittlungsmodul 8 werden die erhaltenen Daten dahingehend bewertet, um welche Art von Situation (A oder B oder C) es sich aktuell handelt. Zudem wird über eine Innenraumkamera eine Identität eines Anwenders 3 festgestellt, welcher mittels seines Smartphones 15 aktuell in einem Identitätsmodul 12 hinterlegt hat, dass seine Identität II lediglich mit einer einzigen Situation assoziiert werden soll, in welcher jedoch sämtliche Fahrerassistenzfunktionen, welche in der Situation C angeboten werden können, auch angeboten werden sollen. Während der Fahrt liefern das Situationsermittlungsmodul 8 und das Identitätsmodul 12 dem zentralen Koordinationsmodul 11 die Information darüber, dass der aktuelle Fahrer 3 in Fahrsituation C sämtliche verfügbare Assistenzfunktionen zu verwenden wünscht. In einem Datenspeicher 6 werden nun dem Fahrer 3 zugeordnete Daten einer Fahrzeugverwendungshistorie ausfindig gemacht, um die Parametrisierung der Fahrerassistenzfunktionen "Lenkassistenz 13" und "Spurassistenz 14" zu parametrieren. Hierzu sind im Datenspeicher 6 auch Informationen aus der übrigen Fahrzeugflotte hinterlegt, wodurch die Lenkassistenz 13 und die Spurassistenz 14 auch unter Verwendung der Erkenntnisse und Verhaltensweisen anderer Fahrer parametriert werden können.

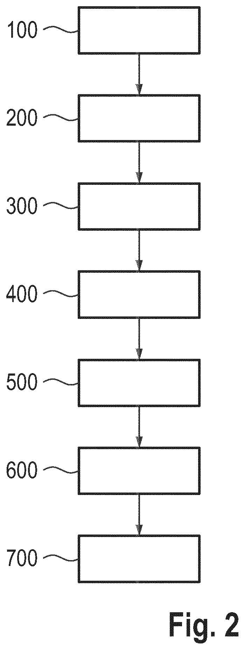

Figur 2 zeigt Schritte eines Ausführungsbeispiels eines erfindungsgemäßen Verfahrens zum Betrieb eines Fahrerassistenzsystems zur Unterstützung eines Fahrers eines Fortbewegungsmittels. In Schritt 100 wird automatisch eine Fahrsituation (Situation) ermittelt, wozu Umgebungssensoren und Drahtloskommunikationsmittel verwendet werden. In Schritt 200 wird automatisch eine Vielzahl von Bedingungen ermittelt, welche der ermittelten Situation zugeordnet sind. Die Bedingungen sind grundsätzlich dafür vorgesehen, über eine Aktivierung oder ein Vorschlagen der Fahrerassistenzfunktion zu entscheiden, können jedoch durch die Vorlieben des Anwenders oder aktuelle Parameter der Situation außer Kraft gesetzt oder modifiziert werden. In Schritt 300 wird anschließend ermittelt, inwiefern die Bedingung bzw. eine Vielzahl von Bedingungen durch Parameter der Situation erfüllt werden. Mit anderen Worten wird also ermittelt, ob eine aktuelle Ausgestaltung einer Situation grundsätzlich dafür geeignet erscheint, eine bestimmte Fahrerassistenzfunktion vorzuschlagen. In Schritt 400 wird eine Identität eines aktuellen Fahrers ermittelt. Dieser hat eigene, persönliche Vorlieben und Verhaltensweisen gezeigt, welche in Schritt 500 als ein Satz von fahrerspezifischen Akzeptanzbedingungen ermittelt werden. Die Akzeptanzbedingungen sind stets auf Basis einer kategorisierten Situation und einer Identität des aktuellen Fahrers vordefiniert. Sie bilden sozusagen eine Art Bewertung und/oder Gewichtung und/oder Schwellenwert-Ansammlung, durch welche in Abhängigkeit einer konkret vorliegenden Situation Fahrerassistenzfunktionen zu aktivieren oder vorzuschlagen sind. In Schritt 600 wird daher ermittelt, ob eine Akzeptanzbedingung oder mehrere Akzeptanzbedingungen des Satzes von Akzeptanzbedingungen erfüllt wird bzw. werden. Wünscht der Anwender als Akzeptanzbedingung beispielsweise, dass ein Nachtsicht-Assistenz ausschließlich bei kurviger Nachtfahrt aktiviert oder vorgeschlagen wird, reicht es zur automatischen Aktivierung oder zum Vorschlagen der Fahrerassistenzfunktion nicht aus, dass es sich aktuell um eine Nachtfahrt handelt oder die Straße einen kurvigen Verlauf zeigt. Vielmehr müssen beide Akzeptanzbedingungen zeitgleich erfüllt sein, um in Schritt 700 die Fahrerassistenzfunktion (Nachtsicht-Assistenz) zu aktivieren oder vorzuschlagen, wenn die dem Fahrer und der Situation zugeordneten Akzeptanzbedingungen erfüllt sind.

### Bezugszeichenliste

- 1: Fahrerassistenzsystem
- 2: Szenerie
- 3: Anwender
- 4: Antenne
- 5: Frontkamera
- 6: Datenspeicher
- 7: Innenraumkamera
- 8: Situationsermittlungsmodul
- 10: Fortbewegungsmittel
- 11: zentrale Kombinationseinheit
- 12: Identitätsermittlungsmodul
- 13: Lenkassistenzsystem
- 14: Spurassistenzsystem
- 15: Smartphone
- 100 bis 700: Verfahrensschritte

## Patentansprüche

1. Verfahren zum Betrieb eines Fahrerassistenzsystems (1) zur Unterstützung eines Fahrers (3) eines Fortbewegungsmittels (10) umfassend die Schritte:
- automatisches Ermitteln (100) einer Fahrsituation und/oder einer Fahrzeugsituation, nachfolgend "Situation" genannt,
- automatisches Ermitteln (200) einer Bedingung für das Aktivieren einer Fahrerassistenzfunktion (13, 14),
- automatisches Ermitteln (300), inwiefern die Bedingung (9) durch Parameter der Situation erfüllt wird,
- automatisches Ermitteln (400) einer Identität des Fahrers (3),
- automatisches Ermitteln (500) eines Satzes von Akzeptanzbedingungen, welcher für die Situation und die Identität des Fahrers (3) vordefiniert ist,
**gekennzeichnet durch die weiteren Schritte:**
- Ermitteln von Daten, welche mittels weiterer Fortbewegungsmittel ermittelt worden sind, wobei ermittelt wird, wenn Fahrer anderer Identitäten in ähnlichen oder identischen Situationen bestimmte Akzeptanzbedingungen an den Tag gelegt haben oder definiert haben, welche auch für den Fahrer (3) des betrachteten Fortbewegungsmittels (10) plausibel sind,
- Sofern eine hinreichende Verwandtschaft zwischen den Situationen der weiteren Fortbewegungsmittel und des betrachteten Fortbewegungsmittels (10) vorherrscht, Anpassen des Satzes von Akzeptanzbedingungen mittels der bestimmten Akzeptanzbedingungen,
- automatisches Ermitteln (600), ob eine Akzeptanzbedingung des angepassten Satzes von Akzeptanzbedingungen erfüllt wird und
- Aktivieren (700) oder Vorschlagen der Fahrerassistenzfunktion (13, 14), wenn die Akzeptanzbedingung erfüllt wird.

2. Verfahren nach Anspruch 1, wobei mindestens zwei, insbesondere drei, bevorzugt vier, insbesondere bevorzugt fünf einzelne Bedingungen der Situation zugeordnet sind, bevor die Fahrerassistenzfunktion aktiviert wird.

3. Verfahren nach Anspruch 1 oder 2, wobei die Identität aus einer Vielzahl unterschiedlicher Identitäten von Fahrern ausgewählt werden, wobei jeder Identität eine Vielzahl von
- potentiell gewünschten Fahrerassistenzfunktionen (13, 14) und/oder
- Akzeptanzbedingungen für die jeweilige Fahrerassistenzfunktion (13, 14) zugeordnet ist.

4. Verfahren nach einem der vorstehenden Ansprüche, wobei die Parameter
- einen Streckenverlauf und/oder
- eine Tageszeit und/oder
- eine Umgebungslichtintensität und/oder
- eine Vertrautheit des Fahrers mit einer Umgebung des Fortbewegungsmittels und/oder
- einen Wachheitsgrad des Fahrers und/oder
- ein Vorhandensein von Niederschlag
charakterisieren.

5. Verfahren nach einem der vorstehenden Ansprüche, wobei die Identität des Fahrers mittels eines optischen Sensors (7) und/oder mittels eines vom Fahrer mitgeführten tragbaren elektronischen Anwenderendgerätes (15) ermittelt wird.

6. Verfahren nach einem der vorstehenden Ansprüche, wobei die Situation informationstechnisch als eine solche ermittelt wird, für welche der identifizierte Fahrer grundsätzlich eine Unterstützung wünscht.

7. Verfahren nach einem der vorstehenden Ansprüche weiter umfassend
- Ermitteln der Akzeptanzbedingungen
- mittels einer Historie der Verwendung des Fortbewegungsmittels (10) durch den Fahrer (3) und/oder
- durch explizite Eingabe durch den Fahrer (3).

8. Verfahren nach einem der vorstehenden Ansprüche weiter umfassend
- Ermitteln einer Gültigkeit von Umständen, unter welchen die Situation auftritt,
- Vergleichen der Umstände mit Daten, welche kennzeichnen, unter welchen zur Situation ähnliche oder identische Situationen in der Vergangenheit aufgetreten sind, und
- Nicht-Aktivieren und/oder Nicht-Vorschlagen der Fahrerassistenzfunktion in Abhängigkeit der Umstände.

9. Fahrerassistenzsystem (1) zur Unterstützung eines Fahrers (3) eines Fortbewegungsmittels (10) umfassend:
- einen Dateneingang
- eine Auswerteeinheit und
- einen Datenausgang, wobei
- die Auswerteeinheit in Verbindung mit dem Dateneingang eingerichtet ist,
- eine Fahrsituation und/oder eine Fahrzeugsituation, nachfolgend "Situation" genannt, zu ermitteln,
- eine Bedingung für das Aktivieren einer Fahrerassistenzfunktion (13, 14) zu ermitteln,
- zu ermitteln, inwiefern die Bedingung (9) durch Parameter der Situation erfüllt wird,
- eine Identität des Fahrers (3) zu ermitteln,
- einen Satz von Akzeptanzbedingungen, welcher für die Situation und die Identität des Fahrers (3) vordefiniert ist, zu ermitteln,
**dadurch gekennzeichnet, dass** die Auswerteeinheit in Verbindung mit dem Dateneingang ferner eingerichtet ist,
- Daten zu ermitteln, welche mittels weiterer Fortbewegungsmittel ermittelt worden sind, wobei ermittelt wird, wenn Fahrer anderer Identitäten in ähnlichen oder identischen Situationen bestimmte Akzeptanzbedingungen an den Tag gelegt haben oder definiert haben, welche auch für den Fahrer (3) des betrachteten Fortbewegungsmittels (10) plausibel sind,
- Sofern eine hinreichende Verwandtschaft zwischen den Situationen der weiteren Fortbewegungsmittel und des betrachteten Fortbewegungsmittels (10) vorherrscht, den Satz von Akzeptanzbedingungen mittels der bestimmten Akzeptanzbedingungen anzupassen,
und
- zu ermitteln, ob eine Akzeptanzbedingung des angepassten Satzes von Akzeptanzbedingungen erfüllt wird und
- die Auswerteeinheit in Verbindung mit dem Datenausgang eingerichtet ist, die Fahrerassistenzfunktion (13, 14) zu aktivieren oder vorzuschlagen, wenn die Akzeptanzbedingung erfüllt wird.

10. Fortbewegungsmittel umfassend ein Fahrerassistenzsystem nach Anspruch 9.

## Claims

1. Method for operating a driver assistance system (1) for supporting a driver (3) of a means of transport (10), which method comprises the steps of:
- automatically ascertaining (100) a driving situation and/or a vehicle situation, hereinafter referred to as "situation,"
- automatically ascertaining (200) a condition for activating a driver assistance function (13, 14),
- automatically ascertaining (300) to what extent the condition (9) is met by parameters of the situation,
- automatically ascertaining (400) an identity of the driver (3),
- automatically ascertaining (500) a set of acceptance conditions predefined for the situation and the identity of the driver (3),
**characterized by** the further steps of:
- ascertaining data which have been ascertained by means of other means of transport, it being ascertained when drivers of other identities in similar or identical situations have applied or defined certain acceptance conditions which are also plausible for the driver (3) of the means of transport (10) under consideration,
- if there is a sufficient similarity between the situations of the other means of transport and the means of transport (10) under consideration, adapting the set of acceptance conditions by means of the determined acceptance conditions,
- automatically ascertaining (600) whether an acceptance condition of the adapted set of acceptance conditions is met and
- activating (700) or suggesting the driver assistance function (13, 14) when the acceptance condition is met.

2. Method according to claim 1, wherein at least two, particularly three, preferably four, particularly preferably five individual conditions are assigned to the situation before the driver assistance function is activated.

3. Method according to claim 1 or claim 2, wherein the identity is selected from a plurality of different driver identities, each identity being assigned a plurality of
- potentially desired driver assistance functions (13, 14) and/or
- acceptance conditions for the relevant driver assistance function (13, 14).

4. Method according to any of the preceding claims, wherein the parameters characterize
- a route and/or
- a time of day and/or
- an ambient light intensity and/or
- a familiarity of the driver with an environment of the means of transport and/or
- a level of alertness of the driver and/or
- a presence of precipitation.

5. Method according to any of the preceding claims, wherein the identity of the driver is ascertained by means of an optical sensor (7) and/or by means of a portable electronic user terminal (15) carried by the driver.

6. Method according to any of the preceding claims, wherein the situation is ascertained by means of information technology as a situation for which the identified driver in principle desires support.

7. Method according to any of the preceding claims, further comprising
- ascertaining the acceptance conditions
- by means of a history of the use of the means of transport (10) by the driver (3) and/or
- by means of explicit input from the driver (3).

8. Method according to any of the preceding claims, further comprising
- ascertaining a validity of circumstances under which the situation occurs,
- comparing the circumstances with data which indicate under what situations similar or identical to the situation have occurred in the past, and
- not activating and/or not suggesting the driver assistance function depending on the circumstances.

9. Driver assistance system (1) for supporting a driver (3) of a means of transport (10), which driver assistance system comprises:
- a data input,
- an evaluation unit and
- a data output,
- the evaluation unit being designed, in conjunction with the data input,
- to ascertain a driving situation and/or a vehicle situation, hereinafter referred to as "situation,"
- to ascertain a condition for activating a driver assistance function (13, 14),
- to ascertain to what extent the condition (9) is met by parameters of the situation,
- to ascertain an identity of the driver (3),
- to ascertain a set of acceptance conditions which is predefined for the situation and the identity of the driver (3),
**characterized in that** the evaluation unit is further designed, in conjunction with the data input,
- to ascertain data which have been ascertained by means of other means of transport, it being ascertained when drivers of other identities in similar or identical situations have applied or defined certain acceptance conditions which are also plausible for the driver (3) of the means of transport (10) under consideration,
- if there is a sufficient similarity between the situations of the other means of transport and the means of transport (10) under consideration, to adapt the set of acceptance conditions by means of the determined acceptance conditions,
and
- to ascertain whether an acceptance condition of the adapted set of acceptance conditions is met and
- the evaluation unit is designed, in conjunction with the data output, to activate or suggest the driver assistance function (13, 14) when the acceptance condition is met.

10. Means of transport comprising a driver assistance system according to claim 9.

## Revendications

1. Procédé d'exploitation d'un système d'assistance au conducteur (1) pour soutenir un conducteur (3) d'un moyen de locomotion (10), comprenant les étapes de :
- établissement automatique (100) d'une situation de conduite et/ou d'une situation de véhicule, ci-après dénommée « situation »,
- établissement automatique (200) d'une condition pour l'activation d'une fonction d'assistance au conducteur (13, 14),
- établissement automatique (300) de la mesure dans laquelle la condition (9) est remplie par des paramètres de la situation,
- établissement automatique (400) d'une identité du conducteur (3),
- établissement automatique (500) d'un jeu de conditions d'acceptation qui est prédéfini pour la situation et l'identité du conducteur (3),
**caractérisé par** les autres étapes de :
- établissement de données, qui ont été établies par le biais d'autres moyens de locomotion, dans lequel il est établi si des conducteurs d'autres identités ont manifesté ou défini, dans des situations similaires ou identiques, des conditions d'acceptation déterminées, qui sont également plausibles pour le conducteur (3) du moyen de locomotion (10) considéré,
- dans la mesure où une parenté suffisante prévaut entre les situations des autres moyens de locomotion et du moyen de locomotion (10) considéré, adaptation du jeu de conditions d'acceptation par le biais des conditions d'acceptation déterminées,
- établissement automatique (600) de si une condition d'acceptation du jeu de conditions d'acceptation adapté est remplie ; et
- activation (700) ou proposition de la fonction d'assistance au conducteur (13, 14) lorsque la condition d'acceptation est remplie.

2. Procédé selon la revendication 1, dans lequel au moins deux, en particulier trois, de préférence quatre, de manière particulièrement préférée cinq conditions individuelles sont associées à la situation avant que la fonction d'assistance au conducteur ne soit activée.

3. Procédé selon la revendication 1 ou 2, dans lequel l'identité est sélectionnée à partir d'une pluralité d'identités différentes de conducteurs, dans lequel à chaque identité est associée une pluralité de
- fonctions d'assistance au conducteur (13, 14) potentiellement souhaitées et/ou
- conditions d'acceptation pour la fonction d'assistance au conducteur (13, 14) respective.

4. Procédé selon l'une des revendications précédentes, dans lequel les paramètres caractérisent
- un itinéraire et/ou
- une heure de la journée et/ou
- une intensité de lumière ambiante et/ou
- une familiarité du conducteur avec un environnement du moyen de locomotion et/ou
- un niveau d'éveil du conducteur et/ou
- une présence de précipitations.

5. Procédé selon l'une des revendications précédentes, dans lequel l'identité du conducteur est établie par le biais d'un capteur optique (7) et/ou par le biais d'un terminal d'application électronique portable (15) emporté par le conducteur.

6. Procédé selon l'une des revendications précédentes, dans lequel la situation est établie par voie d'information comme étant celle pour laquelle le conducteur identifié souhaite en principe un soutien.

7. Procédé selon l'une des revendications précédentes, comprenant en outre
- l'établissement des conditions d'acceptation
- par le biais d'un historique de l'utilisation du moyen de locomotion (10) par le conducteur (3) et/ou
- par saisie explicite par le conducteur (3).

8. Procédé selon l'une des revendications précédentes, comprenant en outre
- l'établissement d'une validité de circonstances dans lesquelles la situation se produit,
- la comparaison des circonstances avec des données qui indiquent dans lesquelles des situations similaires ou identiques à la situation se sont produites dans le passé, et
- la non-activation et/ou l'absence de proposition de la fonction d'assistance au conducteur en fonction des circonstances.

9. Système d'assistance au conducteur (1) pour soutenir un conducteur (3) d'un moyen de locomotion (10), comprenant :
- une entrée de données
- une unité d'évaluation et
- une sortie de données, dans lequel
- l'unité d'évaluation est configurée en liaison avec l'entrée de données,
- pour établir une situation de conduite et/ou une situation de véhicule, ci-après dénommée « situation »,
- pour établir une condition pour l'activation d'une fonction d'assistance au conducteur (13, 14),
- pour établir dans quelle mesure la condition (9) est remplie par des paramètres de la situation,
- pour établir une identité du conducteur (3),
- pour établir un jeu de conditions d'acceptation qui est prédéfini pour la situation et l'identité du conducteur (3),
**caractérisé en ce que** l'unité d'évaluation est en outre configurée en liaison avec l'entrée de données,
- pour établir des données qui ont été établies par le biais d'autres moyens de locomotion, dans lequel il est établi si des conducteurs d'autres identités ont manifesté ou défini, dans des situations similaires ou identiques, des conditions d'acceptation déterminées qui sont également plausibles pour le conducteur (3) du moyen de locomotion (10) considéré,
- dans la mesure où une parenté suffisante prévaut entre les situations des autres moyens de locomotion et du moyen de locomotion (10) considéré, pour adapter le jeu de conditions d'acceptation par le biais des conditions d'acceptation déterminées,
et
- pour établir si une condition d'acceptation du jeu de conditions d'acceptation adapté est remplie et
- l'unité d'évaluation est configurée, en liaison avec la sortie de données, pour activer ou proposer la fonction d'assistance au conducteur (13, 14) lorsque la condition d'acceptation est remplie.

10. Moyen de locomotion comprenant un système d'assistance au conducteur selon la revendication 9.
